# EUROPEAN PATENT APPLICATION

(11) **EP 4 707 220 A1**
(43) Date of publication of application: **11.03.2026**
(21) Application number: 25200665.5
(22) Date of filing: 05.09.2025
(51) Int. Cl.: B66D 1/74

(54) **WINCH SYSTEM FOR SAILING VESSELS**

(30) Priority: 06.09.2024 IT 202400019960
(71) Applicant: Antal S.r.l., 35127 Padova Padova (IT)
(72) Inventor: MOTTIN, Matteo, 36050 QUINTO VICENTINO (VI) (IT); DE STEFANI, Luca, 31029 VITTORIO VENETO (TV) (IT); GOMIERO, Enrico, 35131 PADOVA (IT)
(74) Representative: Milan, Guglielmo

(57) **Abstract**

Winch system (1) for sailing vessels, comprising at least one winch (2), at least one manual drive means (7) of a winch drum, at least one non-manual drive motor (15) of the winch drum, and at least one energy generator (13) connectable to said at least one manual drive means (7). The non-manual drive motor (15) is an electric motor, and the energy generator (13) is an electric generator.

## Description

The present invention relates to a winch system for sailing vessels. In sailing vessels, and particularly in racing sailing vessels, it is known to use a drive system for the winches through pedestals equipped with handles that are set in quick rotation by hand by one or two sailors. These pedestals, also known by the English term of coffee grinder, can be provided with equipment to store enough energy to cope with particular energy peaks required for the winch drives.

An example of such devices is described in DE102008044010A1. The document presents a system of winches in which the pedestals are selectively connectable to a hydraulic pump, which in turn stores energy in the form of a pressurised fluid via a spring-loaded pressure accumulator. If necessary, the pressure accumulator can discharge energy to the winches by supplying one or more hydraulic motors with pressurised fluid discharged by the accumulator.

A main drawback of this technology is that the hydraulic energy storage system results in increasing resistance as the pressure in the storage tank increases. Since, during the drive of a winch, the first few metres of rope or sheet retrieved normally oppose little resistance, while the subsequent metres result in increasing resistance, this system implies that the increasing resistance opposed by a rope retrieved by the winch drum is augmented by the increasing resistance opposed to the hydraulic pump by the pressure accumulator. It follows that the use of such a system is far from optimal.

In other systems, described e.g. in WO1996011841A1, EP1650124A1, EP2058225A1, US20020098930A1 or DE102008043388A1, motion is transmitted from the pedestal to the winch drum by mechanical transmission means. This solution has the drawback that the mechanical means must be designed according to the specific geometry of each vessel. Furthermore, the presence of obstacles or large distances between the pedestal and the winch considerably increases the complexity, weight and bulk of the means constituting the kinematic chain of motion transmission.

A motorised assistance system for manually operated winches is described for example in WO2023036978A1.

The technical problem underlying the present invention is to provide a winch system for sailing vessels that is structurally and functionally designed to at least partially overcome the drawbacks mentioned with reference to the prior art mentioned above. In the context of this problem, it is an aim of the invention to develop a winch system particularly suitable for use in regattas.

Another purpose of the invention is to make available a winch system in which the resistance opposed by the energy storage system decreases as the resistance opposed by the winch drum increases.

A further aim of the invention is to enable the rapid storage of large amounts of energy and an equally massive and rapid release of energy when needed.

Another aim of the invention is to provide an energy-efficient winch system. Another aim of the invention is to provide a compact winch system and easy to install on board the vessels.

This problem is solved, and these aims are at least partly achieved by means of a winch system for sailing vessels made in accordance with at least some of the features that are the subject of the appended claims.

According to a first embodiment of the invention a winch system for sailing vessels comprises at least one winch, preferably at least one manual drive means of a winch drum, preferably at least one motor for non-manual drive of the winch drum, and preferably at least one energy generator connectable to said at least one manual drive means and/or to the winch drum.

Preferably, the winch system also comprises at least one energy accumulator, preferably connectable to the generator to store at least part of the energy generated by said manual drive means and/or the winch drum and deliver it to the non-manual drive motor as needed.

Preferably the non-manual motor is an electric motor. Preferably the generator is an electric generator. Preferably, the energy accumulator is an electric accumulator.

It will be appreciated that the drive of the electric generator is better balanced than with hydraulic energy storage systems in which the resistance increases as the pressure of the compressed fluid increases.

In addition, the motor, generator and accumulator, if any, can be connected together via electrical wiring that can be easily adapted to the specific geometry of each vessel, with minimal weight and bulk requirements.

In a further preferred solution, the accumulator comprises a super capacitor or a bank of super capacitors.

According to an important aspect of the invention, the generator is of the direct current type or includes a DC converter. Alternatively, the DC converter can be integrated in the electric motor or in a circuit connecting the generator to the electric motor.

In embodiments, the winch system comprises a pedestal to which the at least one manual drive means can be associated.

Preferably, the electric generator is housed in the pedestal. This results in a compact system and the installation of the system on board the vessel is simplified.

In embodiments, the pedestal extends longitudinally between a first end to which the at least one manual drive means is associated and a second end configured for attachment to the vessel's deck.

Preferably, the electric generator is housed in the first end of the pedestal. In this way, the generator can be placed close to the manual drive means.

Alternatively, the electric generator can be mounted on the second end of the pedestal, preferably in such a position that - when the pedestal is attached to the deck - the generator is below the deck. This lowers the centre of gravity of the system.

In embodiments, the at least one manual drive means comprises a pair of handles mounted at the opposing ends of a shaft rotatably supported on the pedestal. The electric generator can be connected to the shaft, preferably with the interposition of a multiplier. These features contribute to a compact and easy to install system.

In a preferred example, the generator or multiplier, if any, is keyed to the shaft. Alternatively, the generator or multiplier, if any, can be connected to the shaft via mechanical transmission means, e.g. of belt or chain type.

In an aspect of the invention, the electric motor is of the reversible regenerative type configured to act as an auxiliary electric generator when dragged by the winch drum. Preferably, the electric accumulator is connectable to the electric motor for storing at least part of the energy generated through the electric motor when the electric motor acts as an auxiliary electric generator. In this way, it is possible to recover at least part of the energy released by loosening the rope or sheet, and deliver it to the electric motor as needed.

In an aspect, the present invention relates to a winch system for sailing vessels, comprising at least one winch, at least one manual drive means of a winch drum, at least one non-manual drive motor of the winch drum, and at least one energy generator connectable to said at least one manual drive means, wherein said non-manual drive motor is an electric motor, and said energy generator is an electric generator, wherein the winch system comprises a pedestal to which said at least one manual drive means is associated, said electric generator being housed in the pedestal. This results in a compact system and the installation of the system on board the vessel is simplified.

It should be noted that, in this context, "manual drive" preferably means a hand- or pedal-operated drive.

The features and advantages of the invention will become clearer from the following detailed description of a preferred but not exclusive example of implementation, illustrated by way of non-limiting example, with reference to the accompanying drawings in which:

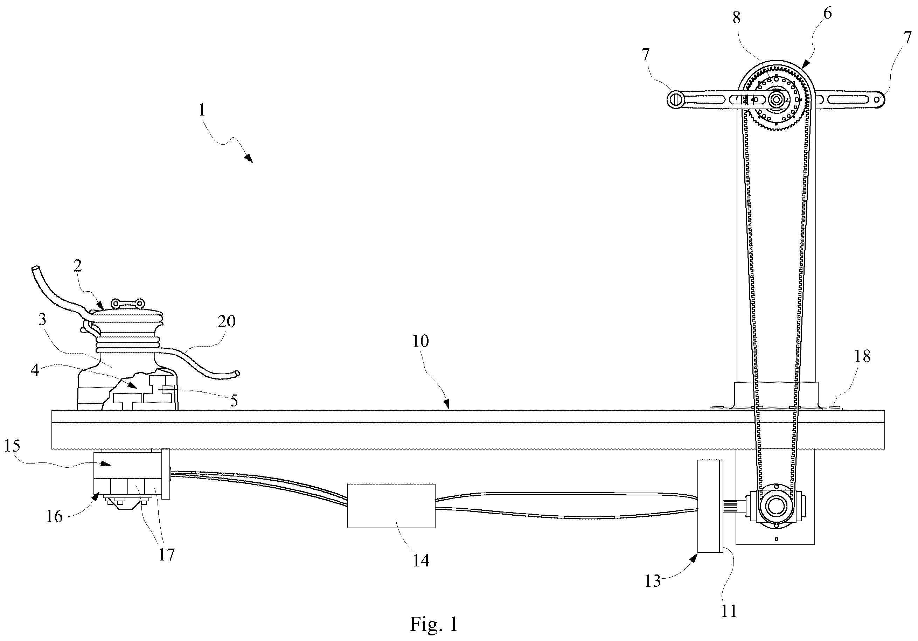

- Fig. 1 is a schematic representation of a winch system for sailing vessels according to an embodiment of the present invention;

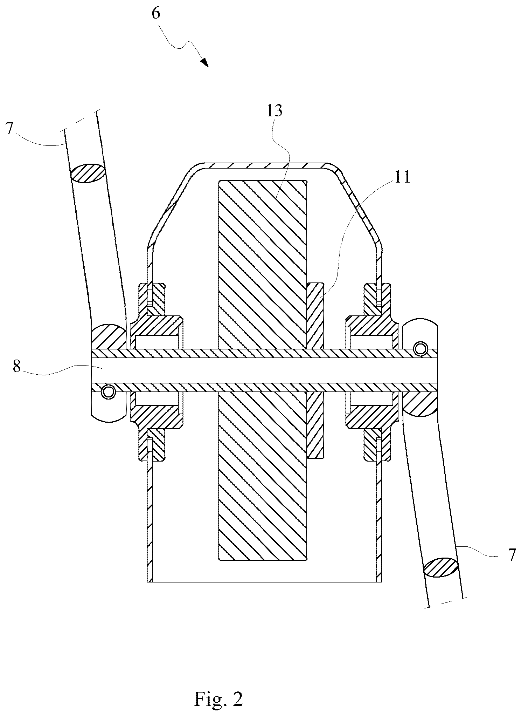

- Fig. 2 is a sectional view of a detail of a winch system for sailing vessels according to an embodiment of the present invention.

In the figures, a winch system for sailing vessels 10 is collectively referred to as 1. It preferably comprises one or more winches 2 on the drum 3 of which a sheet or rope 20 may be wound to hold, haul or loosen said sheet or line, according to the manoeuvre desired for steering the vessel 10. A transmission 4 is preferably connected to the winch drum 3, e.g. a mechanical transmission with rotating shafts 5, which leads to a pedestal 6 of the coffee grinder type. The pedestal 6 preferably comprises connection means 18, e.g. of the bolted type, for attachment to the deck of the vessel 10.

It is understood that each winch can be connected to several pedestals, or that the same pedestal is connectable to several winches in accordance with construction layouts known in the specific technical field. It is likewise understood that the winch 2 may be single or multi-speed, preferably via a mechanical gearbox housed in the transmission 4, and that it may be of the unidirectional rotation type or reversible, again in accordance with layouts known in the relevant technical field.

Preferably each pedestal 6 is provided with a manual drive means 7, for example a pair of handles mounted at opposing ends of a shaft 8 rotatably supported on the respective pedestal. One or two members of the crew assigned to the coffee grinder, by turning the handles 7 in one direction or the other, rotate the drum 3 via the transmission 4. The pedestals 6 also house an electric energy generator 13, preferably connected to the shaft 8 with the interposition of a multiplier 11 preferably of the epicycloid type. The generator 13 can be permanently gripped on the shaft 8 or selectively excluded via a coupling.

An example of a suitable generator is an alternator with a permanent magnet stator or inductive winding stator, adapted to generate alternating current electrical energy according to the rotation. In this case, since it is preferable for implementing the present invention that the current generated is of the continuous type, a rectifier circuit or DC converter 14 may be provided downstream of the alternator.

Each winch 2 is also provided with a motor 15, not a manual one, preferably an electric motor, e.g. of the reversible regenerative type, i.e. capable of acting as a DC generator when dragged by the drum of the winch 2. Alternatively, the motor 6 can be implemented more traditionally with a gearmotor, preferably a worm or similar type, capable of unidirectional rotation and locking if driven in counter-rotation.

In a preferred embodiment the energy generator 13 is connectable to at least one energy accumulator 16 to store at least part of the energy generated through the manual drive of the generator 13. In a preferred solution, the accumulator is made by one or more super capacitors 17 connected in parallel. The choice of such a storage system is preferred because super capacitors accept very high charge and discharge currents and therefore allow high peaks of energy to be absorbed and, above all, supplied in a short time. Moreover, when a capacitor is connected to a voltage source, it begins to accumulate electrostatic charge. During charging, a current circulates in the circuit, which decreases over time. This is because the capacitor's internal electric field opposes the passage of charges. The more the capacitor becomes charged (i.e. the greater the potential difference between its plates), the more intense the electric field.

Once the potential difference between the capacitor's plates equals the value of the potential difference provided by the generator, the current is completely cancelled out and the capacitor acts as an energy "tank", which can be returned during the discharge process.

The decrease in charge current as the charge accumulated on the plates increases results in a decrease in the torque resisting the rotation of the handles of the pedestal. As a result, the maximum resisting torque is opposed to the handles in the initial phase of capacitor's charge, while metres of rope are retrieved without it opposing effective resistance. On the contrary, in the next phase of regulation of the tension of the rope wound onto the drum, when the resistance opposed by the rope is maximum, the resisting torque opposed by the generator 13 decreases due to the decrease in the capacitor's charge current. The pedestal drive is therefore much better balanced than with hydraulic energy storage systems in which the resistance increases as the pressure of the compressed fluid increases.

The energy thus stored can be returned by the capacitor during this phase in which voltage peaks can occur in the rope to be regulated, which are thus fully or partially absorbed by the electric motor through the capacitor's discharge current.

In embodiments, the winch system comprises a control device, preferably an electronic one. The control device may include a push-button, push-button panel or other human-machine interface.

Preferably, the control device is configured to control the winch's electric motor according to an input. The input can come from a user via the drive of the control device.

In embodiments, the control device is configured to control the winch's electric motor, e.g. to adjust the rope pull, in an automatic mode according to parameters detected via one or more sensors. For example, the winch may comprise a sensor configured to detect the load transmitted by the rope. In addition, one or more sensors may be provided, configured to detect the wind direction and/or speed, course, navigation speed and/or inclination of the vessel. In this way, a control feedback is obtained that can be used to control the winch in automatic mode. Preferably, the automatic mode can be entered via an input from the control device. This reduces the need for human intervention while achieving high comfort in steering the vessel and at the same time increasing the speed and repeatability of the manoeuvres.

The management of the charge and discharge current of the electric accumulator (in the preferred example, the bank of super capacitors), is preferably parameterized as follows.

Preferably, the control device is configured to compare an indicative parameter of the electrical energy produced by the electric generator and an indicative parameter of the electrical energy required by the electric motor.

Preferably, the electric accumulator is configured to store electrical energy when the electrical energy produced by the electric generator is greater than that required by the electric motor.

Preferably, the winch system is configured to haul a rope according to an input from the control device. The electrical energy for hauling the rope can be delivered under electric motor trigger conditions and/or under conditions of electrical energy compensation to support the generator, in particular under conditions of electric power peak demand (power boost).

Preferably, the winch system is configured to loosen the rope according to an input from the control device. During loosening, the electric motor is preferably dragged by the winch drum in opposite rotation to the rotation produced to haul the rope. In embodiments, the winch system is configured to control the loosening, e.g. in terms of winch drum rotation speed and/or in terms of drum drag resistance. Preferably, the winch's electric motor is configured to generate electrical energy when it is dragged by the winch drum during loosening. In other words, when the winch is operating in loosening control, the winch's electric motor can act as an electric generator.

Preferably, the winch system is configured to recover the electrical energy generated by the electric motor when the winch is dragged during loosening. The electrical energy thus generated can be stored in the accumulator.

## Claims

1. Winch system (1) for sailing vessels, comprising at least one winch (2), at least one manual drive means (7) of a winch drum, at least one non-manual drive motor (15) of the winch drum, and at least one energy generator (13) connectable to said at least one manual drive means (7), wherein said non-manual drive motor (15) is an electric motor, and said energy generator (13) is an electric generator, **characterised in that** it comprises at least one energy accumulator (16) connectable to the energy generator for storing at least part of the energy generated through said manual drive means (7) and delivering it as needed to said non-manual drive motor (15), wherein said energy accumulator (16) is an electric accumulator.

2. Winch system (1) according to claim 1, wherein said electric accumulator comprises a super capacitor (17).

3. Winch system (1) according to claim 2, wherein said electric accumulator comprises a bank of super capacitors (17).

4. Winch system (1) according to any of the preceding claims, wherein said electric generator is of the direct current type.

5. Winch system (1) according to any one of the preceding claims, wherein said electric generator or said electric motor or a circuit connecting said electric generator to said electric motor comprises a DC converter (14).

6. Winch system (1) according to any one of the preceding claims, comprising a pedestal (6) to which said at least one manual drive means (7) is associated, said electric generator being housed in the pedestal (6).

7. Winch system (1) according to the preceding claim, wherein said at least one manual drive means (7) comprises a pair of handles mounted at the opposing ends of a shaft (8) rotatably supported on the pedestal (6), said electric generator being connected to said shaft (8).

8. Winch system (1) according to the preceding claim, wherein said electric generator is connected to said shaft (8) with interposition of a multiplier (11).

9. Winch system (1) according to any one of the preceding claims, wherein said electric motor is of the reversible regenerative type configured to act as an auxiliary electric generator when dragged by the winch drum (2), said electric accumulator being connectable to said electric motor for storing at least part of the energy generated through said electric motor when said electric motor acts as an auxiliary electric generator.
